# EUROPEAN PATENT SPECIFICATION

(11) **EP 1 520 746 B1**
(45) Date of publication and mention of the grant of the patent: **12.12.2012**
(21) Application number: 04104809.1
(22) Date of filing: 30.09.2004
(51) Int. Cl.: B60L 9/14, B60L 9/30

(54) **Propulsion system for a multiple-voltage locomotive**
Antriebseinheit für eine Lokomotive mit Mehrfachspannungsversorgung
Système de propulsion pour locomotive alimentée sous tensions multiples

(30) Priority: 03.10.2003 IT TO20030784
(43) Date of publication of application: 06.04.2005
(73) Proprietor: ANSALDOBREDA S.p.A., 80147 Napoli (IT)
(72) Inventor: De Marco, Generoso, 80100 Napoli (IT); Ghislanzoni, Franco, 24121 Bergamo (IT); Pappalardo, Ennio, 80038 Pomigliano D'Arco (IT); Porzio, Mario, 80131 Napoli (IT)
(74) Representative: Jorio, Paolo

(56) References cited:
- EP-A- 0 594 457
- EP-A- 1 052 136
- PATENT ABSTRACTS OF JAPAN vol. 1995, no. 04, 31 May 1995 (1995-05-31) & JP 07 007808 A (MITSUBISHI ELECTRIC CORP), 10 January 1995 (1995-01-10)

## Description

The present invention relates to a propulsion system for a multiple-voltage locomotive.

As is known, railway networks in different countries often employ different locomotive power voltages. In Europe, in particular, alternating power voltages (25 kV/50 Hz and 15 kV/16.7 Hz) and direct power voltages (3 kV and 1.5 kV) are available.

There is a strong demand, therefore, for multiple-voltage locomotives with power systems capable of operating indifferently with direct or alternating power voltage.

Currently marketed power systems designed to do this comprise all the electric components required for both direct-current and alternating-current supply; and a number of selecting devices for selecting and powering only the components required for a given type of supply.

As a result, known power systems are extremely bulky, heavy, and expensive. EP-A-1 052 136 describes a propulsion system as set in the preamble of claim 1.

It is an object of the present invention to provide a propulsion system for multiple-voltage locomotives, designed to eliminate the drawbacks of known systems.

According to the present invention, there is provided a propulsion system for a locomotive, comprising a drive transformer; a high-voltage stage; an inverter for powering an electric motor; and charge storage means between the high-voltage stage and the inverter; said propulsion system being characterized by providing for a first operating configuration, in which the primary winding of said transformer receives an alternating line voltage, and the secondary winding of the transformer communicates with an input of the high-voltage stage operating as a controlled rectifier; said propulsion system also providing for a second operating configuration, in which the inputs of the high-voltage stage receive a direct line voltage, and the secondary winding of the transformer is interposed between an output of the high-voltage stage and an input of the inverter; said high-voltage stage effecting a static voltage conversion in said second operating configuration; and said propulsion system comprising a device for short-circuiting the primary winding of said transformer in said second operating configuration.

In this way, the transformer (which is the bulkiest and heaviest component of the propulsion system) is actively employed for both alternating-current and direct-current supply.

The invention will now be described with particular reference to the accompanying drawings, in which:
Figure 1 shows a propulsion system for a multiple-voltage locomotive, in accordance with the teachings of the present invention;
Figure 2 shows a first operating configuration of the Figure 1 propulsion system;
Figure 3 shows a second operating configuration of the Figure 1 propulsion system;
Figure 4 shows a variation of the Figure 1 propulsion system.

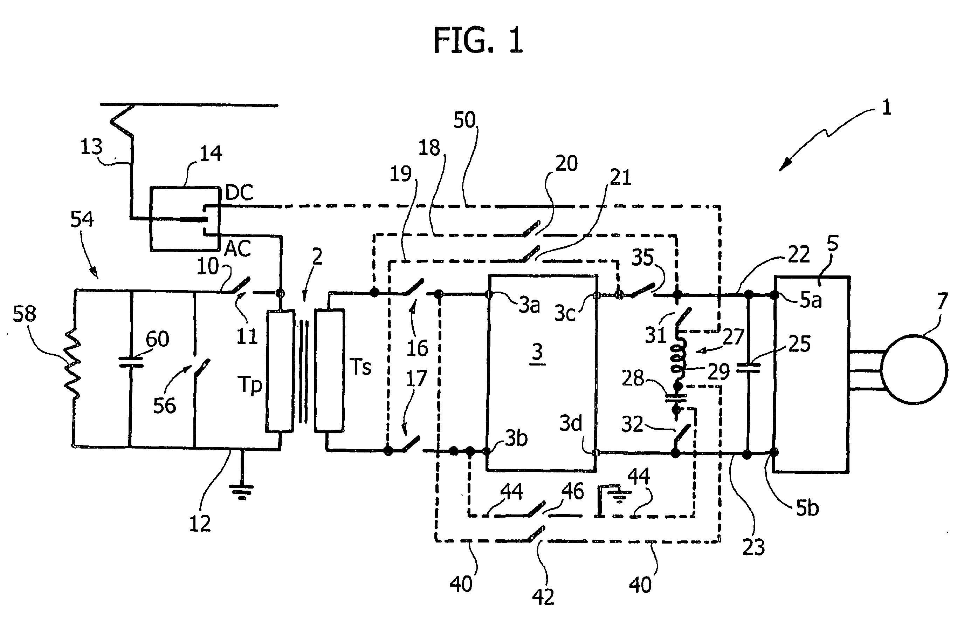

Number 1 in Figure 1 indicates as a whole a propulsion system for a multiple-voltage locomotive (not shown), comprising a drive transformer 2; a high-voltage stage 3; and an inverter 5 for powering a three-phase electric motor 7.

More specifically, a primary winding Tp of transformer 2 has a first terminal connectable/disconnectable to/from an electric line 10 by a switch (isolating switch) 11; and a second terminal connected to an electric line 12.

Primary winding Tp of transformer 2 communicates with a current pickup device 13 (the pantograph of the locomotive) via a selecting device 14, when this is in a first operating configuration.

Electric line 12, on the other hand, communicates electrically with a rail (reference potential) along which the locomotive runs.

Transformer 2 also comprises a secondary winding Ts connectable to a first and second input 3a, 3b of high-voltage stage 3 by respective switches 16 and 17.

Secondary winding Ts is also connected to electric lines 18 and 19, along which are located respective cutout switches 20, 21.

High-voltage stage 3 has outputs 3c, 3d communicating with respective electric lines 22, 23 connected to respective terminals of an electric charge storage element shown schematically as a capacitor 25.

A filter 27, defined by a capacitor 28 and an inductor 29 in series, is connectable/disconnectable to/from electric lines 22, 23 by respective switches 31, 32.

The terminal of capacitor 28 facing switch 32 is in electrical contact with the reference potential.

A switch 35 is located along electric line 22, between output 3c and a terminal of capacitor 25, and has a first and second terminal communicating electrically with electric lines 19 and 18; and electric lines 22 and 23 also communicate with a first and second input 5a, 5b of inverter 5.

A first electric line 40 extends between input 3a of high-voltage stage 3 and the terminal of capacitor 28 in electrical contact with inductor 29; and a switch 42 is located along electric line 40.

A second electric line 44 extends between input 3b of high-voltage stage 3 and the terminal of capacitor 28 facing switch 32; and a switch 46 is located along electric line 44.

An electric line 50 extends between the terminal of inductor 29 facing switch 31, and selecting device 14 which, in a second operating configuration, connects electric line 50 to current pickup device 13.

A device 54 is also provided to short-circuit primary winding Tp of drive transformer 2 in the second operating configuration.

Device 54 comprises a normally-closed switch 56 having a first terminal connected to a second terminal of primary winding Tp (line 12), and a second terminal connected to a first terminal of switch (isolating switch) 11, which, as stated, has a second terminal connected to the first terminal of primary winding Tp. Device 54 also comprises a resistor 58 and a capacitor 60 connected in parallel and communicating with the terminals of switch 56.

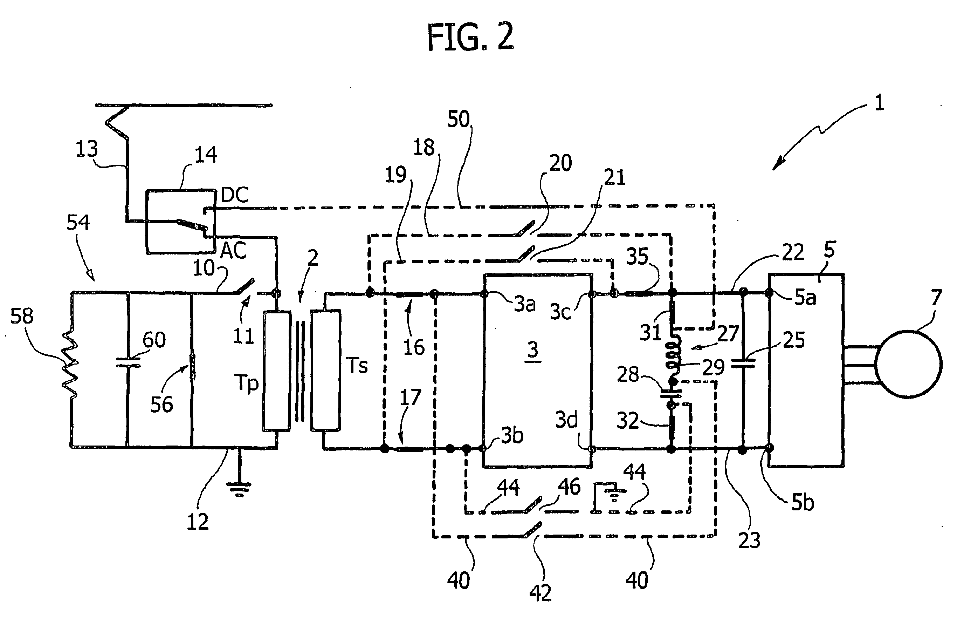

In actual use, in the first operating configuration (Figure 2), switches 11, 20, 21, 46, 42 are open, switches 16, 17, 35, 31, 32, 56 are closed, and selecting device 14 is also set to the first operating configuration.

In the first operating configuration, primary winding Tp of transformer 2 therefore communicates with pantograph 13 and with electric line 12, and second winding Ts of transformer 2 communicates with inputs 3a, 3b of high-voltage stage 3 (switches 16 and 17 are closed).

Outputs 3c, 3d of high-voltage stage 3 in turn communicate with capacitor 25, with filter 27 in parallel with capacitor 25, and with the inputs of inverter 5.

This configuration provides for powering the locomotive with alternating line voltage (15 kV, 16.7 Hz or 25 kV, 50 Hz) picked up by pantograph 13 and supplied to transformer 2, which modifies (in particular, reduces) the alternating line voltage to supply high-voltage stage 3 with alternating voltage of an appropriate value. This is then rectified by high-voltage stage 3 which, in the first operating configuration, in fact operates as a controlled rectifier. The rectified voltage is smoothed by filter 27 and stored in capacitor 25, so that a highly constant voltage is present at the input of inverter 5 and is used in known manner to power electric motor 7 via inverter 5.

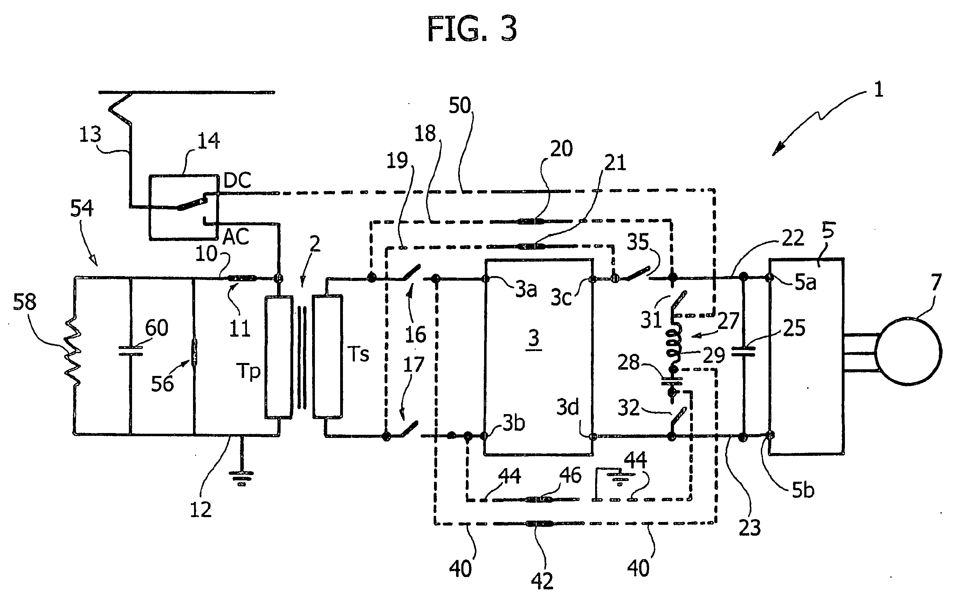

In the second operating configuration (Figure 3), switches 11, 56, 20, 21, 46, 42 are closed, switches 16, 17, 35, 31, 32 are open, and selecting device 14 is also set to the second operating configuration.

In the second operating configuration, input 3a of high-voltage stage 3 is therefore connected by inductor 29 to pantograph 13, and input 3b is grounded. Inductor 29 may be provided with an intermediate tap to assume a suitable inductance value to act as a line filter inductor in the second operating configuration.

Capacitor 28 is also interposed between inputs 3a and 3b of high-voltage stage 3, and is therefore connected to the reference potential.

Output 3c of the high-voltage stage, on the other hand, communicates along line 19 with a first terminal of secondary winding Ts, the second terminal of which communicates along line 18 with input 5a of inverter 5.

In this way, secondary winding Ts of transformer 2 is interposed between one output (3c) of high-voltage stage 3 and one input (5a) of inverter 5, the primary winding of transformer 2 is connected in a short-circuit configuration (switches 56 and 11 both closed), and capacitor 25 is still interposed between electric lines 22 and 23 downstream from the secondary winding of transformer 2.

The second configuration provides for powering the locomotive with direct line voltage (3 kV or 1.5 kV) supplied to inputs 3a, 3b of high-voltage stage 3 which, in the second operating configuration, operates as a static voltage converter.

The voltage at the output of high-voltage stage 3 is supplied to capacitor 25 via the inductor defined by the secondary winding of transformer 2, the primary winding of which is short-circuited. The second configuration provides for effectively smoothing the intermediate voltage between high-voltage stage 3 and inverter 5.

It should be pointed out that, in the second configuration, the direct voltage between lines 22 and 23 fluctuates (on account of variations, for example, in the energy draw of motor 7); which voltage (and current) fluctuations are reflected in transformer 2, whose magnetic core switches from a saturated to a non-saturated condition and vice versa, so that the inductance of the transformer could vary considerably if it were not for the provision made by the present invention. Variations in inductance may induce harmonics which are transmitted to, and produce noise along, the power line; which noise, in certain operating situations, may disturb operation of signalling devices along the track of the locomotive.

Variations in inductance may also induce overvoltage in certain components.

Particularly strong harmonics may even activate the safety devices on, thus resulting in stoppage of, the locomotive.

The above hazards are safeguarded against by the present invention short-circuiting the primary winding of transformer 2, which greatly reduces variations in inductance of the transformer caused by voltage and current fluctuations.

When system 1 is turned off to switch from direct-current to alternating-current power lines, a residual direct current of a few tens of amperes remains in primary winding Tp of transformer 2, which, as stated, is short-circuited (switches 11 and 56 closed), and is only extinguished after a considerable length of time (roughly a hundred seconds).

Cutting off current by opening switch 11 may induce electric arcs resulting in serious damage to switch 11, which therefore cannot be used for cutting off the residual current.

When system 1 is turned off to switch from direct-current to alternating-current power lines, switch 56 is therefore first opened to direct the residual current to capacitor 60 and resistor 58 where it is dissipated by Joule effect; and, once the residual current is extinguished, switch 11 is opened, thus fully opening the primary winding of transformer 2.

Switch 56 is then closed again to ensure reliability of device 54.

Switching from the direct-current to the alternating-current configuration is therefore quick and easy, thus improving the degree of interoperation of the locomotive.

It should be pointed out that components 58, 60 and 56 are always disconnected from the alternating voltage (which is extremely high) in the first operating configuration, and are only used in the second operating configuration for direct voltage lower than the alternating voltage.

For this reason, components 58, 60 and 56 need no high-voltage insulation, whereas switch 11 is provided with suitable high alternating-voltage insulation.

Clearly, changes may be made to the propulsion system as described and illustrated herein without, however, departing from the scope of the present invention as defined by the appended claims.

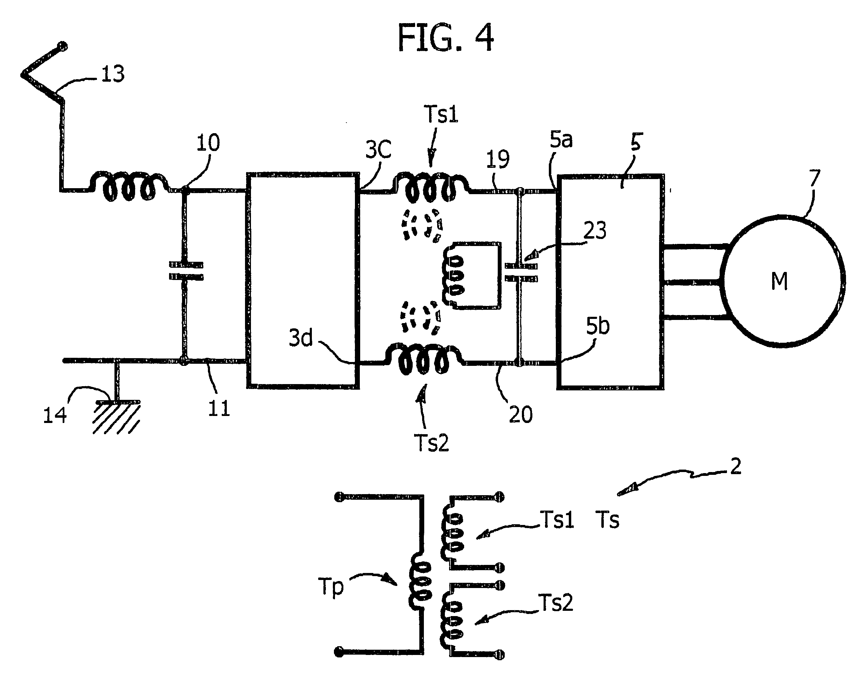

For example, transformer 2 may comprise a secondary winding Ts defined by a first winding Ts1 and a second winding Ts2 separated electrically from each other and coupled magnetically to the same primary winding Tp. In the first operating configuration, the first and second winding are arranged in series, and together form a single secondary winding having a number of turns equal to the total number of turns of both windings Ts1 and Ts2. In the second operating configuration, a first secondary winding Ts1 is located between a first output 3c of high-voltage stage 3 and a corresponding first input 5a of inverter 5, and a second secondary winding Ts2 is located between a second output 3d of high-voltage stage 3 and a corresponding second input 5b of inverter 5 (Figure 4). In which case, the switches (not shown for the sake of simplicity) required to set the first and second winding to the above two operating configurations are obvious to an expert, with no inventiveness involved.

The circuit illustrated of the above variation provides for effective potential balance.

## Claims

1. A propulsion system for a locomotive, comprising a drive transformer (2); a high-voltage stage (3); an inverter (5) for powering an electric motor (7); and charge storage means between the output of the high-voltage stage (3) and the inverter (5);
said propulsion system providing for a first operating configuration, in which the primary winding (Tp) of said transformer (2) receives an alternating line voltage, and the secondary winding (Ts) of the transformer (2) communicates with an input of the high-voltage stage (3) operating as a controlled rectifier;
said propulsion system being chacterized by also providing for a second operating configuration, in which the inputs of the high-voltage stage (3) receive a direct line voltage, and the secondary winding of the transformer (2) is interposed between an output of the high-voltage stage and an input of the inverter (5); said high-voltage stage effecting a static voltage conversion in said second operating configuration;
said propulsion system comprising a device (54) for short-circuiting the primary winding of said transformer in said second operating configuration.

2. A system as claimed in Claim 1, wherein said device (54) for short-circuiting the primary winding of said transformer also defines discharging means for dissipating the residual current in said primary winding, when said system formerly operating in the second operating configuration is turned off.

3. A system as claimed in Claim 2, wherein said discharging means comprise resistor means (58) which are selected (56) to direct the residual current flowing in the short-circuited primary winding to the resistor means, so as to dissipate the residual current by Joule effect.

4. A system as claimed in Claim 3, wherein capacitor means (60) are located in parallel with said resistor means (58).

5. A system as claimed in Claim 3 or 4, wherein said device (54) for short-circuiting the primary winding of said transformer comprises at least one switch, which is closed to short-circuit said primary winding, and is opened once said residual current is dissipated.

6. A system as claimed in Claim 3 or 4, wherein said device (54) for short-circuiting the primary winding comprises an isolating switch (11) having a first terminal communicating with a first terminal of said primary winding (Tp), and a second terminal communicating with a first terminal of a switch (56) having a second terminal communicating with a second terminal of the primary winding (Tp); said resistor means (58) communicating with terminals of said switch (56) of normally closed type; and said switch (56) being opened to direct said residual current to said resistor means (58).

7. A system as claimed in Claim 6, wherein capacitor means (60) are located in parallel with said resistor means (58).

8. A system as claimed in any one of the foregoing Claims, wherein said transformer (2) has a secondary winding (Ts) comprising a first secondary winding (Ts1) and a second secondary winding (Ts2) separated electrically from each other and coupled magnetically to the same primary winding (Tp);
the first and second secondary winding being in series with each other in said first operating configuration;
in said second operating configuration, a first secondary winding (Ts1) being located between a first output (3c) of the high-voltage stage (3) and a corresponding first input (5a) of the inverter (5); and, in said second operating configuration, a second secondary winding (Ts2) being located between a second output (3d) of the high-voltage stage (3) and a corresponding second input (5b) of the inverter (5).

## Patentansprüche

1. Antriebssystem für eine Lokomotive, das Folgendes umfasst: einen Fahrttransformator (2); eine Hochspannungsstufe (3); einen Wechselrichter (5) zum Versorgen eines Elektromotors (7); und ein Ladungsspeichermittel zwischen dem Ausgang der Hochspannungsstufe (3) und dem Wechselrichter (5); wobei das Antriebssystem eine erste Betriebskonfiguration bereitstellt, in der die Primärwicklung (Tp) des Transformators (2) eine Leiterwechselspannung empfängt und die Sekundärwicklung (Ts) des Transformators (2) mit einem Eingang der Hochspannungsstufe (3), die als ein geregelter Gleichrichter fungiert, kommuniziert;
wobei das Antriebssystem **dadurch gekennzeichnet ist, dass** es des Weiteren eine zweite Betriebskonfiguration bereitstellt, in der die Eingänge der Hochspannungsstufe (3) eine Leitergleichspannung empfangen und die Sekundärwicklung des Transformators (2) zwischen einem Ausgang der Hochspannungsstufe und einem Eingang des Wechselrichters (5) angeordnet ist; wobei die Hochspannungsstufe in der zweiten Betriebskonfiguration eine statische Spannungsumwandlung bewirkt;
wobei das Antriebssystem eine Vorrichtung (54) zum Kurzschließen der Primärwicklung des Transformators in der zweiten Betriebskonfiguration umfasst.

2. System nach Anspruch 1, wobei die Vorrichtung (54) zum Kurzschließen der Primärwicklung des Transformators außerdem ein Entladungsmittel zum Dissipieren des Reststroms in der Primärwicklung definiert, wenn das System, das davor in der zweiten Betriebskonfiguration betrieben wurde, abgeschaltet wird.

3. System nach Anspruch 2, wobei das Entladungsmittel ein Widerstandsmittel (58) umfasst, das so gewählt wird (56), dass es den Reststrom, der in der kurzgeschlossenen Primärwicklung fließt, zu dem Widerstandsmittel leitet, so dass der Reststrom durch den Joule'schen Effekt dissipiert wird.

4. System nach Anspruch 3, wobei ein Kondensatormittel (60) parallel zu dem Widerstandsmittel (58) angeordnet ist.

5. System nach Anspruch 3 oder 4, wobei die Vorrichtung (54) zum Kurzschließen der Primärwicklung des Transformators mindestens einen Schalter umfasst, der geschlossen wird, um die Primärwicklung kurzzuschließen, und geöffnet wird, sobald der Reststrom dissipiert wurde.

6. System nach Anspruch 3 oder 4, wobei die Vorrichtung (54) zum Kurzschließen der Primärwicklung einen Trennschalter (11) umfasst, der einen ersten Anschluss aufweist, der mit einem ersten Anschluss der Primärwicklung (Tp) kommuniziert, und einen zweiten Anschluss aufweist, der mit einem ersten Anschluss eines Schalters (56) kommuniziert, der einen zweiten Anschluss aufweist, der mit einem zweiten Anschluss der Primärwicklung (Tp) kommuniziert; wobei das Widerstandsmittel (58) mit Anschlüssen des Schalters (56) vom Öffnungstyp kommuniziert; und wobei der Schalter (56) geöffnet wird, um den Reststrom zu dem Widerstandsmittel (58) zu leiten.

7. System nach Anspruch 6, wobei das Kondensatormittel (60) parallel zu dem Widerstandsmittel (58) angeordnet ist.

8. System nach einem der vorangehenden Ansprüche, wobei der Transformator (2) eine Sekundärwicklung (Ts) aufweist, die eine erste Sekundärwicklung (Ts1) und eine zweite Sekundärwicklung (Ts2) aufweist, die elektrisch voneinander getrennt sind und magnetisch mit derselben Primärwicklung (Tp) gekoppelt sind; wobei die erste und die zweite Sekundärwicklung in der ersten Betriebskonfiguration miteinander in Reihe geschaltet sind;
wobei in der zweiten Betriebskonfiguration eine erste Sekundärwicklung (Ts1) zwischen einem ersten Ausgang (3c) der Hochspannungsstufe (3) und einem entsprechenden ersten Eingang (5a) des Wechselrichters (5) angeordnet ist; und
wobei in der zweiten Betriebskonfiguration eine zweite Sekundärwicklung (Ts2) zwischen einem zweiten Ausgang (3d) der Hochspannungsstufe (3) und einem entsprechenden zweiten Eingang (5b) des Wechselrichters (5) angeordnet ist.

## Revendications

1. Système de propulsion pour une locomotive, comprenant un transformateur d'attaque (2) ; un étage haute tension (3) ; un convertisseur (5) pour faire fonctionner un moteur électrique (7) ; et un moyen de stockage de charge entre la sortie de l'étage haute tension (3) et le convertisseur (5) ;
ledit système de propulsion est fourni à une première configuration de fonctionnement, où l'enroulement primaire (Tp) dudit transformateur (2) reçoit une tension composée alternative, et l'enroulement secondaire (Ts) du transformateur (2) communique avec une entrée de l'étage haute tension (3) fonctionnant en tant que redresseur contrôlé ;
ledit système de propulsion étant **caractérisé par** le fait d'être fourni également à une deuxième configuration de fonctionnement, où les entrées de l'étage haute tension (3) reçoivent une tension composée continue, et l'enroulement secondaire du transformateur (2) est interposé entre une sortie de l'étage haute tension et une entrée du convertisseur (5) ; ledit étage haute tension effectuant une conversion de tension statique dans ladite deuxième configuration de fonctionnement ;
ledit système de propulsion comprenant un dispositif (54) destiné à mettre en court-circuit l'enroulement primaire dudit transformateur dans ladite deuxième configuration de fonctionnement.

2. Système tel que revendiqué dans la revendication 1, dans lequel ledit dispositif (54) destiné à mettre en court-circuit l'enroulement primaire dudit transformateur définit également un moyen de décharge pour dissiper le courant résiduel dans ledit enroulement primaire, lorsque ledit système fonctionnant précédemment dans la deuxième configuration de fonctionnement est éteint.

3. Système tel que revendiqué dans la revendication 2, dans lequel ledit moyen de décharge comprend un moyen de résistance (58) qui est choisi (56) pour diriger le courant résiduel s'écoulant dans l'enroulement primaire court-circuité au moyen de résistance, afin de dissiper le courant résiduel par effet Joule.

4. Système tel que revendiqué dans la revendication 3, dans lequel un moyen de condensateur (60) est situé en parallèle avec ledit moyen de résistance (58).

5. Système tel que revendiqué dans la revendication 3 ou 4, dans lequel ledit dispositif (54) destiné à mettre en court-circuit l'enroulement primaire dudit transformateur comprend au moins un commutateur, qui est fermé pour mettre en court-circuit ledit enroulement primaire, et est ouvert une fois ledit courant résiduel est dissipé.

6. Système tel que revendiqué dans la revendication 3 ou 4, dans lequel ledit dispositif (54) destiné à mettre en court-circuit l'enroulement primaire comprend un sectionneur (11) ayant une première borne communiquant avec une première borne dudit enroulement primaire (Tp), et une deuxième borne communiquant avec une première borne d'un commutateur (56) ayant une deuxième borne communiquant avec une deuxième borne de l'enroulement primaire (Tp) ; ledit moyen de résistance (58) communiquant avec les bornes dudit commutateur (56) de type normalement fermé ; et ledit commutateur (56) étant ouvert pour diriger ledit courant résiduel audit moyen de résistance (58).

7. Système tel que revendiqué dans la revendication 6, dans lequel un moyen de condensateur (60) est situé en parallèle avec ledit moyen de résistance (58).

8. Système tel que revendiqué dans l'une quelconque des revendications précédentes, dans lequel ledit transformateur (2) présente un enroulement secondaire (Ts) comprenant un premier enroulement secondaire (Ts1) et un deuxième enroulement secondaire (Ts2) séparés électriquement l'un de l'autre et couplés magnétiquement au même enroulement primaire (Tp) ;
les premier et deuxième enroulements secondaires étant en série l'un avec l'autre dans ladite première configuration de fonctionnement ;
dans ladite deuxième configuration de fonctionnement, un premier enroulement secondaire (Ts1) étant situé entre une première sortie (3c) de l'étage haute tension (3) et une première entrée correspondante (5a) du convertisseur (5) ; et, dans ladite deuxième configuration de fonctionnement, un deuxième enroulement secondaire (Ts2) étant situé entre une deuxième sortie (3d) de l'étage haute tension (3) et une deuxième entrée correspondante (5b) du convertisseur (5).
